# EUROPÄISCHE PATENTSCHRIFT

(11) **EP 2 885 554 B1**
(45) Veröffentlichungstag und Bekanntmachung des Hinweises auf die Patenterteilung: **26.10.2016**
(21) Anmeldenummer: 14741910.5
(22) Anmeldetag: 23.07.2014
(51) Int. Cl.: F16F 1/368

(54) **BLATTFEDERANORDNUNG FÜR KRAFTFAHRZEUGE**
LEAF SPRING ARRANGEMENT FOR MOTOR VEHICLES
SYSTÈME À RESSORT À LAME POUR VÉHICULE AUTOMOBILE

(30) Priorität: 23.07.2013 DE 102013107889
(43) Veröffentlichungstag der Anmeldung: 24.06.2015
(73) Patentinhaber: Muhr und Bender KG, 57439 Attendorn (DE)
(72) Erfinder: HAHN, Christoph, 57439 Attendorn (DE); FÖRSTER, Rainer, 51519 Odenthal (DE); KOBELEV, Vladimir, 57439 Attendorn (DE); MÜLLER, David, 57368 Lennestadt (DE); MANKE, Lutz, 58097 Hagen (DE)
(74) Vertreter: Neumann Müller Oberwalleney & Partner Patentanwälte
(86) Internationale Anmeldenummer: PCT/EP2014/065801
(87) Internationale Veröffentlichungsnummer: WO 2015/011181

(56) Entgegenhaltungen:
- EP-A1- 2 570 694
- WO-A1-90/03281
- DE-A1- 10 202 114
- DE-A1-102009 032 919
- DE-A1-102010 015 951
- US-A- 3 685 812
- US-A1- 2006 103 103
- US-A1- 2013 127 133

## Beschreibung

Die Erfindung betrifft eine Blattfederanordnung für eine Radaufhängung eines Kraftfahrzeugs, wobei die Blattfederanordnung eine Blattfeder, eine erste Aufnahmevorrichtung zur Lagerung eines ersten Federendes und eine zweite Aufnahmevorrichtung zur Lagerung des zweiten Federendes aufweist.

Aus der DE 10 2010 015 951 A1 ist eine Blattfeder für Kraftfahrzeuge bekannt, die aus faserverstärktem Kunststoffmaterial hergestellt ist. Die Blattfeder soll auftretende Seitenführungskräfte aufnehmen und auf eine Blattfederaufnahmevorrichtung übertragen. Die Blattfeder umfasst einen Biegegelenkabschnitt und einen Federungsabschnitt, wobei der Biegegelenkabschnitt eine Längenänderung des Federungsabschnitts ausgleichen kann. Beide Enden der Blattfeder sind momentenfest und verschiebefest in der Blattfederaufnahmevorrichtung festgelegt.

Aus der DE 102 02 114 A1 ist eine Glasfaser-Verbundstoff-Einblatt-Bogenfeder zur Verwendung in einer Fahrzeugkarosserie bekannt. Die Enden der Bogenfeder sind über Bolzenendhalterungen an der Fahrzeugkarosserie angebracht und in der Mitte an einer Achse festgelegt. Die Bogenfeder hat eine wellenförmige Ausgestaltung, die um eine zentrale vertikale Achse symmetrisch verläuft. Dabei weist die Bogenfeder einen zentralen in Aufwärtsrichtung gekrümmten Bereich auf, der zwischen zwei in Abwärtsrichtung gekrümmten Bereichen angeordnet ist, die zwischen zwei weiteren in Aufwärtsrichtung gekrümmten Bereichen angeordnet sind. Die Bogenfeder wird unter Last zusammengedrückt, das heißt auf Druck belastet.

Aus der US 2008/0252033 A1 ist eine Blattfeder für eine Radaufhängung eines Kraftfahrzeugs bekannt. Die Blattfeder ist aus einem faserverstärkten Kunststoff hergestellt und an ihren Enden mit elastischen Körpern verbunden, die wiederum am Fahrwerk des Kraftfahrzeugs befestigt sind. In einer Ausführungsform sind die Enden nach oben abgebogen und in jeweils einer elastischen Buchse um eine Längsachse des Kraftfahrzeugs schwenkbar gelagert.

Aus der DE 10 2009 032 919 A1 ist eine Federungsanordnung mit einer Blattfeder aus Faserverbundwerkstoff bekannt. Die Blattfeder hat einen Mittelabschnitt und zwei daran anschließende Endabschnitte, die jeweils in einem Lagerbock aufgenommen sind. Zur Veränderung der Federkennlinie ist an einem der Lagerböcke ein Abstützmittel angeordnet, gegen das sich die Blattfeder bei Belastung anlegen kann.

Aus der DE 898 154 A1 ist eine Abfederung von Schienenfahrzeugen mit einer Blattfeder bekannt. Ein Ende der Blattfeder ist als Auge ausgebildet und hierüber am Untergestell gelagert. Mit zunehmender Durchbiegung stützen sich die Federenden der Blattfeder auf elastische Auflager ab.

Aus der DE 36 37 281 A1 ist ein am Rahmen eines Fahrgestells befestigter Federbock bekannt. Es ist eine Blattfeder aus Kunststoff vorgesehen, die an einem Ende ein Lagerauge aufweist und an dem anderen Ende gegenüber dem Federbock vertikal abgestützt ist.

Aus der DE 2009 015 662 B3 ist eine Federungsanordnung mit einer Blattfeder für ein Kraftfahrzeug bekannt. Die Blattfeder ist aus Faserverbundwerkstoff hergestellt und an einem Ende in einem Klemmkörper gehalten. Der Klemmkörper ist schwenkbar am Lagerbock des Kraftfahrzeugs befestigt. Es ist ein Anschlag am Lagerbock vorgesehen, gegen den sich der Klemmkörper abstützen kann.

Aus der DE 36 13 804 C1 ist eine Vorrichtung mit einer Blattfeder aus faserverstärktem Kunststoff und einem endseitigen Krafteinleitungsteil bekannt. Die Blattfeder hat einen keilförmigen Endabschnitt, der in dem Krafteinleitungsteil formschlüssig eingeklemmt ist.

Aus der US 4 802 659 B ist eine Blattfeder aus faserverstärktem Kunststoffmaterial bekannt. Die Blattfeder hat einen verdickten Zentralabschnitt und sich zu den Enden hin verjüngende Endabschnitte.

Aus der US 2006/103103 A1 ist eine Federanordnung mit einer Blattfeder und einer Luftfeder bekannt. Die Blattfeder ist mit dem einen Ende schwenkbar an einem Rahmen gelagert und mit dem anderen über die Luftfeder am Rahmen federnd abgestützt, wobei das federnd abgestützte Ende in Längsrichtung verschiebbar ist. Beim Bremsen und Beschleunigen wirken Zug- und Druckkräfte in horizontaler Richtung auf einen Teilabschnitt der Blattfeder.

Der vorliegenden Erfindung liegt die Aufgabe zugrunde, eine Blattfederanordnung für Kraftfahrzeuge vorzuschlagen, die einfach herzustellen und montierbar ist und bei Belastung eine progressive Federkennlinie hat.

Die Lösung besteht in einer Blattfederanordnung für eine Radaufhängung eines Kraftfahrzeugs, umfassend: eine Blattfeder aus faserverstärktem Kunststoffmaterial zur federnden Abstützung eines Radträgers des Kraftfahrzeugs, wobei die Blattfeder einen ersten Endabschnitt, einen hiervon ausgehenden Federungsabschnitt, einen Biegeabschnitt und einen zweiten Endabschnitt aufweist, wobei sich der Federungsabschnitt im Einbauzustand im Wesentlichen in Längsrichtung des Kraftfahrzeugs erstreckt und zur Aufnahme des Radträgers gestaltet ist, wobei der Federungsabschnitt und der Biegeabschnitt über einen gekrümmten Übergangsabschnitt miteinander verbunden sind und der Federungsabschnitt länger ist als der Biegeabschnitt; eine erste Aufnahmevorrichtung zur Lagerung des ersten Endabschnitts; eine zweite Aufnahmevorrichtung zur Lagerung des zweiten Endabschnitts; wobei die erste Aufnahmevorrichtung und die zweite Aufnahmevorrichtung derart gestaltet sind, dass der erste Endabschnitt und der zweite Endabschnitt im Wesentlichen verschiebungsfest relativ zueinander gehalten sind, so dass die Blattfeder mit steigender Belastung durch vom Radträger eingeleitete Vertikalkräfte zunehmend auf Zug belastet wird; wobei zumindest eine der ersten und zweiten Aufnahmevorrichtungen derart gestaltet ist, dass der jeweils zugehörige Endabschnitt um eine quer zur Fahrzeuglängsachse verlaufende Schwenkachse schwenkbar gelagert ist; und wobei im Einbauzustand der Blattfeder der erste Endabschnitt in Fahrtrichtung des Kraftfahrzeugs vorne und der zweite Endabschnitt hinten angeordnet ist. Die Blattfeder ist so gestaltet, dass sie zumindest bei größeren vom Radträger eingeleiteten Vertikalkräften zunehmend auf Zug belastet wird, weswegen sie auch als Blattzugfeder bezeichnet werden kann. Dies gilt zumindest für einen Teil des gesamten möglichen Federwegs.

Ein Vorteil der Blattfederanordnung besteht darin, dass die Blattfeder aufgrund der verschiebungsfesten Fixierung der Endabschnitte sowohl auf Biegung als auch auf Zug beansprucht wird. Dabei überlagern sich die in der Feder auftretenden Zug- und Biegespannungen und führen so insgesamt zu einer progressiven Federkennlinie. Die Zugkräfte werden dadurch in der Blattfeder erzeugt, dass deren Endabschnitte jeweils verschiebungsfest in den zugehörigen Aufnahmevorrichtungen fixiert sind. Mit verschiebungsfest ist in diesem Zusammenhang gemeint, dass die Endabschnitte in Längsrichtung des Kraftfahrzeugs fest eingespannt sind, so dass sie sich bei Belastung der Feder zumindest nicht wesentlich in Längsrichtung verlagern können. Es versteht sich, dass eine geringfügige Verschiebbarkeit, die sich beispielsweise aufgrund belastungsbedingter elastischer Verformungen insbesondere an einer schwenkbaren Aufnahmevorrichtung ergeben können, mit umfasst sein sollen. Diese geringfügigen Verschiebbarkeiten können an jeder Aufnahmevorrichtung bis zu 20 mm, vorzugsweise bis zu 10 mm betragen. Durch die im Wesentlichen verschiebungsfeste Aufnahme der Blattfederenden nimmt die Zugspannung mit steigender Belastung der Blattfeder progressiv zu, so dass auch deren Federkennlinie progressiv zunimmt. Im Einbauzustand hat dies zur Folge, dass die Federung bei zunehmender Beladung des Kraftfahrzeugs steifer wird, was sich günstig auf den Fahrkomfort und die Fahrstabilität auswirkt.

Die im Federabschnitt und Biegeabschnitt jeweils auftretenden Spannungen verändern sich bei zunehmender Belastung und unterscheiden sich hinsichtlich ihrer einzelnen Spannungskomponenten voneinander. Der Federungsabschnitt wird durch vom Radträger eingeleitete Vertikalkräfte insbesondere auf Zug belastet und der Biegeabschnitt wird bei Zugbelastung des Federungsabschnitts insbesondere auf Biegung belastet. Mit insbesondere oder im Wesentlichen soll in diesem Zusammenhang mit umfasst sein, dass bei einem gegebenen Belastungszustand jeweils weitere Belastungskomponenten bzw. Spannungskomponenten in dem jeweiligen Federabschnitt vorliegen können beziehungsweise, dass sich einzelne Spannungskomponenten mit zunehmender Belastung verändern.

Mit zumindest eine der Aufnahmevorrichtungen ist gemeint, dass nach einer ersten Möglichkeit nur eine der ersten und zweiten Aufnahmevorrichtung als schwenkbares beziehungsweise momentenfreies Lager für das zugehörige Federende ausgestaltet ist, während die jeweils andere Aufnahmevorrichtung als starres beziehungsweise momentenfestes Lager gestaltet ist. Eine Schwenkbarkeit führt zu einer Momentenfreiheit um die Schwenkachse, so dass die Begriffe schwenkbar und momentenfrei vorliegend synonym verwendet werden. Ein momentenfestes Lager ist nicht schwenkbar und wird vorliegend daher auch als starr bezeichnet. Die Zuordnung der schwenkbaren (momentenfreien) und starren (momentenfesten) Lagerung zum Federungs- beziehungsweise Biegeabschnitt je nach Anforderung an das Federverhalten frei gewählt werden. Es können nach einer zweiten Möglichkeit auch beide Aufnahmevorrichtungen als momentenfreie Lager ausgestaltet sein.

Eine momentenfreie Lagerung führt an der Aufnahmevorrichtung zu verringerten Kräften zwischen Feder und Aufnahmevorrichtung. Die momentenfreie Lagerung wird insbesondere dadurch bewerkstelligt, dass der zugehörige Endabschnitt um eine Schwenkachse schwenkbar in der Aufnahmevorrichtung beziehungsweise gegenüber einem ortsfesten Bauteil gelagert ist. Die Schwenkachse verläuft vorzugsweise zumindest im Wesentlichen quer zur Fahrzeuglängsachse, wobei Winkelabweichungen von ± 10° relativ zu einer Normalen zur Fahrzeuglängsachse mit umfasst sein sollen. Das Schwenklager ist vorzugsweise so gestaltet, dass Drehbewegungen des schwenkbar aufgenommenen Federendes um bis zu mindestens 10° und/oder um bis zu maximal 60°, vornehmlich um einen Verdrehwinkel von 25° bis 45°, um die Schwenkachse möglich sind.

Nach einer bevorzugten Ausgestaltung ist der Federungsabschnitt als ein erster Federschenkel und der Biegeabschnitt als ein zweiter Federschenkel der Blattfeder gestaltet, wobei sich der erste und der zweite Federschenkel hinsichtlich ihrer Länge und/oder Krümmung voneinander unterscheiden können. Im Einbauzustand der Blattfeder ist an dem Federungsabschnitt ein Radträger befestigt, über den die Kräfte des Fahrzeugrads in die Blattfeder eingeleitet werden. Insofern erstreckt sich der Federungsabschnitt im Einbauzustand im Wesentlichen in Längsrichtung des Kraftfahrzeugs beziehungsweise horizontal. Der Biegeabschnitt hat im Einbauzustand im Kraftfahrzeug vorzugsweise eine Haupterstreckung in vertikaler Richtung. Die vom Radträger in den Federungsabschnitt eingeleiteten Vertikalkräfte führen zu einer Zugbelastung im Federungsabschnitt, welche wiederum eine Biegung des Biegeabschnitts in Richtung des dem Biegeabschnitt entfernten Federendes bewirkt.

Durch konstruktive Auslegung des Federungsabschnitts beziehungsweise des Biegeabschnitts hinsichtlich physikalischer Parameter, wie Querschnittsfläche, Länge oder Breite, lässt sich das Federungsverhalten beziehungsweise die Progression der Blattfeder einstellen. Dabei gilt, dass je länger der Biegeabschnitt oder je kleiner die Querschnittsfläche des Biegeabschnitts ist, desto weicher ist die Feder, beziehungsweise umgekehrt, je kürzer oder dicker der Biegeabschnitt ist, desto steifer ist die Feder.

Vorzugsweise hat der Federungsabschnitt im unbelasteten Einbauzustand der Blattfeder eine untere konvexe Wölbung. Mit unbelastetem Einbauzustand ist insbesondere gemeint, dass keinerlei Kräfte auf die Blattfeder einwirken. Demgegenüber ist vorgesehen, dass der Federungsabschnitt in belastetem Einbauzustand der Blattfeder bei maximaler Einfederung eine untere konkave Wölbung aufweist. Mit anderen Worten findet mit zunehmender Belastung der Feder eine Umkehr der Wölbung des Federungsabschnitt von konvex nach konkav statt, wobei zwischen diesen beiden Positionen eine Neutralstellung durchlaufen wird. Bei anfänglicher Belastung, in welcher der Federungsabschnitt unten konvex ist, liegen im Federungsabschnitt insbesondere Biege- und Druckspannungen vor. Bei zunehmender Belastung flacht die unten konvexe Wölbung ab, wobei die Druckspannungen im Federungsabschnitt zunächst zu- und dann wieder abnehmen und schließlich zu Null werden. Die Position, in welcher der Federungsabschnitt im Wesentlichen druck- und zugspannungsfrei ist, definiert die Neutralstellung. Dabei ist die Blattfeder vorzugsweise so gestaltet, dass die Neutralstellung in federfähigem belasteten Einbauzustand anliegt, das heißt bei ruhendem un- oder gering beladenem Fahrzeug. Bei weiter steigender Belastung, das heißt in beladenem Zustand oder dynamischer Einfederbewegung wird die Blattzugfeder weiter elastisch verformt, wobei der Federungsabschnitt zunehmend auf Zug belastet wird. Mit anderen Worten ist die Blattfeder vorzugsweise derart gestaltet, dass der Federungsabschnitt bei elastischer Verformung durch vom Radträger eingeleitete Vertikalkräfte in einem ersten Federwegbereich auf Druck belastet wird und, bei zunehmender Belastung und damit zunehmender elastischer Verformung, in einem zweiten Federwegbereich auf Zug belastet wird.

Der Biegeabschnitt hat im Einbauzustand der Blattfeder vorzugsweise eine untere konkave Wölbung. Zwischen dem Federungsabschnitt und dem Biegeabschnitt kann ein gekrümmter Verbindungsabschnitt vorgesehen sein, dessen Radius kleiner ist als ein Radius des Biegeabschnitts und/oder kleiner ist als ein Radius des Federungsabschnitts.

Nach einer bevorzugten Ausgestaltung ist der Federungsabschnitt länger als der Biegeabschnitt, wobei das Verhältnis zwischen Federungsabschnitt und Biegeabschnitt insbesondere größer 3 : 1, insbesondere größer 4 : 1 oder sogar größer 5 : 1 ist. Nach einer möglichen Ausgestaltung ist das Verhältnis zwischen Federungsabschnitt und Biegeabschnitt insbesondere kleiner 10 : 1, insbesondere kleiner 9: 1 oder sogar kleiner 8 : 1 ist, wobei es sich versteht, dass die genannten oberen und unteren Werte beliebig miteinander kombinierbar sind.

Die Zuordnung des längeren Federschenkels beziehungsweise kürzeren Federschenkels zur momentenfreien beziehungsweise momentenfesten Aufnahmevorrichtung ist in Abhängigkeit von dem gewünschten Federungsverhalten frei wählbar. Bei momentenfester Lagerung des langen Federschenkels und momentenfreier Lagerung des kurzen Federschenkels wird eine verhältnismäßig hohe Federrate beziehungsweise hohe Federkraft erzeugt. Bei umgekehrter Zuordnung, das heißt momentenfreie Lagerung des langen Federschenkels und momentenfester Lagerung des kurzen Federschenkels, werden eine um ein Vielfaches geringere Federrate und niedrigere Federkräfte erzeugt. Geringste Federraten und Federkräfte liegen an, wenn beide Enden der Blattfeder momentenfrei gelagert sind.

Ausgehend vom ersten Endabschnitt erstreckt sich der als Federungsabschnitt gestaltete erste Federschenkel. Es ist denkbar, dass neben dem als Biegeabschnitt gestalteten zweiten Federschenkel ein oder mehrere weitere Federschenkel vorgesehen sind. Es ist also zumindest ein Biegeabschnitt vorgesehen, mit dem die auf den Federungsabschnitt bei Belastung einwirkenden Zugspannungen einstellbar sind.

Die zumindest eine Aufnahmevorrichtung mit momentenfreier Lagerung des zugehörigen Federendes kann einen Anschlag aufweisen, welcher eine Schwenkbewegung der Blattfeder um die Schwenkachse begrenzt. Bei Verwendung von momentenfreien Lagerungen an beiden Enden der Blattfeder kann die erste und/oder die zweite Aufnahmevorrichtung entsprechend mit Anschlag versehen sein. Durch entsprechende konstruktive Ausgestaltung des Anschlags kann das Federungsverhalten der Blattfeder beeinflusst werden. Denn, wenn es zum Anschlag und damit zur Begrenzung der Schwenkbewegung der Blattfeder kommt, steigt die Federkraft an, was zu einer steigenden Progression der Federkennlinie führt. Vorzugsweise ist der Anschlag variabel einstellbar, so dass sich die Kraft-Feder-Kennlinie einfach verändern beziehungsweise einstellen lässt.

Für eine einfache Fertigung und eine hohe Festigkeit kann insbesondere vorgesehen sein, dass der erste Endabschnitt und/oder der zweite Endabschnitt mechanisch unbearbeitet, insbesondere bohrungsfrei gestaltet ist/sind. Für eine sichere Aufnahme der Federenden in den Aufnahmevorrichtungen, auch unter hohen Belastungen, ist es günstig, wenn der erste Endabschnitt und/oder der zweite Endabschnitt keilförmig mit zu den Enden hin größer werdender Dicke gestaltet ist/sind. Hierdurch wird ein Herausrutschen der Blattfeder aus der Aufnahmevorrichtung vermieden.

Vorzugsweise hat der Federungsabschnitt einen zentralen Aufnahmebereich zur Aufnahme des Radträgers, wobei der zentrale Aufnahmebereich insbesondere eine größere Dicke haben kann als hieran anschließende Bereiche des Federungsabschnitts. Durch die größere Dicke werden die Spannungen in dem Aufnahmebereich, welcher gleichzeitig den Bereich der Krafteinleitung vom Radträger bildet, gering gehalten. Der Aufnahmebereich hat insbesondere eine ebene Oberseite und/oder eine ebene Unterseite, die parallel zueinander ausgerichtet sein können. Hiermit wird eine gute Krafteinleitung eines an der Blattfeder zu befestigenden Trägerteils für das Fahrzeugrad gewährleistet. Dieser ebene Aufnahmebereich kann eine Länge von etwa 150 mm bis 200 mm haben.

Nach einer bevorzugten Ausgestaltung ist die Blattfeder einteilig hergestellt. Die Blattfeder kann beispielsweise im Wege des Harzinjektionsverfahrens (Resin Transfer Moulding, RTM) oder durch ein Pressverfahren hergestellt werden. Durch die einteilige Ausgestaltung der Blattfeder werden Schwächungen der mechanischen Festigkeit durch Fügestellen oder dergleichen vermieden. Die Feder kann insbesondere aus unidirektionalen vorimprägnierten Fasern, sogenannten Prepregs, mit duroplastischer oder thermoplastischer Matrix im Pressverfahren hergestellt werden. Auf diese Weise kann die gewünschte Formgebung der Blattfeder im unbelasteten Zustand auf einfache Weise erreicht werden.

Eine Aufnahmevorrichtung zur momentenfreien Lagerung kann einen Aufnahmekörper aufweisen, der gegenüber einem ortsfesten Bauteil um die Schwenkachse schwenkbar gelagert ist, sowie ein Spannkörper, welche mit dem Aufnahmekörper lösbar verbindbar ist, wobei der Endabschnitt der Blattfeder zwischen dem Aufnahmekörper und dem Spannkörper einspannbar ist. Die lösbare Verbindung zwischen Aufnahmekörper und Spannkörper kann durch beliebige geeignete Verbindungsmittel bewerkstelligt werden, beispielsweise mittels Schraubverbindungen.

Eine Aufnahmevorrichtung zur momentenfesten Lagerung kann einen Aufnahmekörper aufweisen, der an einem ortsfesten Bauteil fixiert ist, und einen Spannkörper, der mit dem Aufnahmekörper lösbar verbindbar ist, wobei der Endabschnitt der Blattfeder zwischen dem Aufnahmekörper und dem Spannkörper einspannbar ist. Der Aufnahmekörper ist an dem ortsfesten Bauteil, beispielsweise einem Fahrwerksteil des Kraftfahrzeugs, verschiebefest und drehfest gehalten, so dass um eine Querachse des Kraftfahrzeugs wirkende Biegemomente von der Blattfeder in die Aufnahmevorrichtung eingeleitet werden können.

Nach einer möglichen Ausgestaltung weist zumindest einer von dem Federungsabschnitt und dem Biegeabschnitt eine variable Dicke über der Länge auf. Alternativ oder in Ergänzung hierzu kann zumindest einer von dem Federungsabschnitt und dem Biegeabschnitt eine im Wesentlichen konstante Breite über der Länge aufweisen. Mit "im Wesentlichen konstant" sollen gewisse Toleranzabweichungen von insbesondere bis zu ± 5 % mit umfasst sein. Nach einer weiteren möglichen Ausgestaltung kann die Querschnittsfläche der Blattfeder über der Länge zumindest weitestgehend konstant sein, wobei die Dicke und die Höhe der Blattfeder über der Länge variabel sein können. Insbesondere kann die Dicke der Blattfeder im Bereich der Radträgeraufnahme oder den Endabschnitten der Blattfeder erhöht sein. Durch eine konstante Querschnittsfläche wird ein gleichmäßiger Faserverlauf in der Blattfeder über der Länge erreicht, was zu einer hohen Festigkeit führt. Es ist jedoch ebenso denkbar, dass die Querschnittsfläche über der Länge der Blattfeder variabel ist, was beispielsweise durch zusätzliche Lagen von Prepregs in den entsprechenden Bereichen erreicht werden könnte.

Bevorzugte Ausführungsformen der Erfindung werden nachstehend anhand der Zeichnungsfiguren erläutert. Hierin zeigt:
- Figur 1: eine erfindungsgemäße Blattfederanordnung für eine Radaufhängung eines Kraftfahrzeugs in einer ersten Ausführungsform
A) in dreidimensionaler Ansicht;
B) in Draufsicht;
C) in Seitenansicht;
- Figur 2: die Kraft-Weg-Kennlinien der Blattfederanordnung gemäß Figur 1;
- Figur 3: eine erfindungsgemäße Blattfederanordnung für eine Radaufhängung eines Kraftfahrzeugs in einer zweiten Ausführungsform
A) in dreidimensionaler Ansicht;
B) in Draufsicht;
C) in Seitenansicht;
D) die erste Lagerung in entspanntem Zustand;
E) die erste Lagerung in einer ersten Anschlagposition; und
F) die erste Lagerung in einer zweiten Anschlagposition;
- Figur 4: die Kraft-Weg-Kennlinien der Blattfederanordnung gemäß Figur 3 mit unterschiedlicher Einstellung des Anschlags;
- Figur 5: eine erfindungsgemäße Blattfederanordnung für eine Radaufhängung eines Kraftfahrzeugs in einer dritten Ausführungsform
A) in dreidimensionaler Ansicht;
B) in Draufsicht;
C) in Seitenansicht;
- Figur 6: eine erfindungsgemäße Blattfederanordnung für eine Radaufhängung eines Kraftfahrzeugs in einer vierten Ausführungsform
A) in dreidimensionaler Ansicht;
B) in Draufsicht;
C) in Seitenansicht.

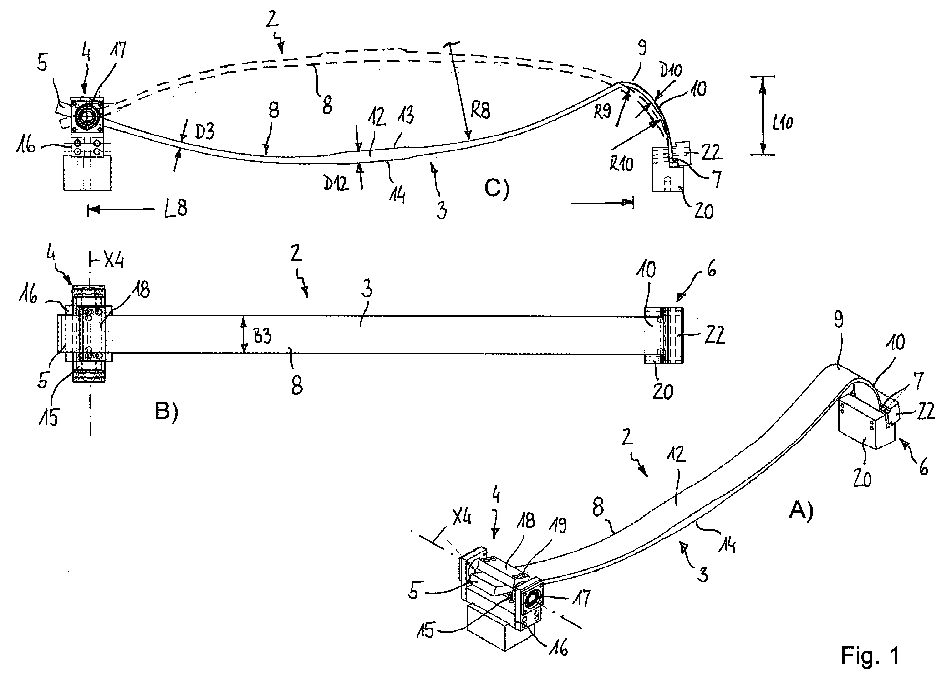

Die Figuren 1A) bis 1C) werden im Folgenden gemeinsam beschrieben. Es ist eine Blattfederanordnung 2 in einer ersten Ausführungsform gezeigt. Die Blattfederanordnung 2 weist eine Blattfeder 3 aus faserverstärktem Kunststoffmaterial zur federnden Abstützung eines nicht dargestellten Radträgers eines Kraftfahrzeugs auf, eine erste Aufnahmevorrichtung 4 zur Lagerung eines ersten Endabschnitts 5 der Blattfeder 3 und eine zweite Aufnahmevorrichtung 6 zur Lagerung des zweiten Endabschnitts 7 der Blattfeder.

Ausgehend vom ersten Ende 5 hat die Blattfeder 3 einen ersten Federschenkel 8 und einen zweiten Federschenkel 10, wobei die beiden Federschenkel 8, 10 durch einen Übergangsabschnitt 9 miteinander verbunden sind. Der zweite Federschenkel 10 endet mit dem zweiten Endabschnitt 7, der in der zweiten Aufnahmevorrichtung 6 fixiert ist. Der erste Federschenkel 8 dient zur Aufnahme eines nicht dargestellten Radträgers, an dem ein Fahrzeugrad befestigt ist. Hierfür hat der erste Federschenkel 8 einen zentralen Aufnahmebereich 12, welcher gegenüber den hieran seitlich anschließenden Bereichen eine größere Dicke D12 aufweist. Die Oberseite 13 und die Unterseite 14 des Aufnahmebereichs 12 haben ebene Flächen, die insbesondere parallel zueinander ausgerichtet sind. Durch die ebenen Flächen wird eine gute Montierbarkeit und gleichmäßige Krafteinleitung des Radträgers in die Blattfeder 3 ermöglicht. Der Aufnahmebereich 12 kann beispielsweise eine Länge von 150 mm bis 200 mm aufweisen.

Der erste Federschenkel 8 weist im Einbauzustand eine Haupterstreckung in Längsrichtung des Kraftfahrzeugs beziehungsweise in horizontaler Richtung auf, während der zweite Federschenkel 10 eine Haupterstreckung in Hochrichtung des Kraftfahrzeugs beziehungsweise in vertikaler Richtung hat. Im Einbauzustand weist das erste Ende 5 in Fahrtrichtung (nach vorne), während das zweite Ende 7 hinten liegt und insbesondere nach unten gerichtet. Der erste Federschenkel 8 federt bei Belastung der Blattfederanordnung ein und bildet insofern einen Federungsschnitt. Der zweite Federschenkel 10 verbiegt sich bei Belastung der Blattfeder 3 und bildet insofern einen Biegeabschnitt. Dabei führen die vom Radträger in den Federungsabschnitt 10 eingeleiteten Vertikalkräfte nach Überschreiten der Neutralstellung der Blattfeder zu einer zunehmenden Zugbelastung im Federungsabschnitt, wodurch die Biegung des Biegeabschnitts in Richtung des dem Biegeabschnitt entfernten Endabschnitts 5 bewirkt wird. Bis zum Erreichen der neutralen Lage der Feder liegen im Federungsabschnitt 8 insbesondere Biege- und Druckspannungen an.

Erster und zweiter Federschenkel 8, 10 können sich hinsichtlich ihrer Länge und/oder Krümmung voneinander unterscheiden. Vorliegend ist die Länge des Federungsabschnitts 8 ist um ein Vielfaches größer als die des Biegeabschnitts 10, wobei das Verhältnis von Länge Federungsabschnitt zu Länge Biegeabschnitt vorzugsweise größer als fünf und kleiner als zehn ist. Es ist ferner erkennbar, dass der Federungsabschnitt 8 im unbelasteten Einbauzustand, welcher mit durchgezogenen Linien dargestellt ist, eine untere konvexe beziehungsweise obere konkave Wölbung, insbesondere mit einem mittleren Krümmungsradius R8 aufweist. Bei Belastung der Feder aufgrund von eingeleiteten Vertikalkräften wird der Federungsabschnitt nach oben beaufschlagt, wodurch sich bis zum Erreichen einer neutralen Position, in der der Federungsabschnitt im Wesentlichen gerade ist, zunächst Biege- und Druckspannungen ergeben. Bei Überschreiten der neutralen Position kehrt sich die Wölbung des Federungsabschnitts 8 um, das heißt dieser hat eine untere konkave und obere konvexe Wölbung. Mit Überschreiten der neutralen Position werden die Biegespannungen im Federungsabschnitt 8 von Zugspannungen überlagert. Die Zugspannungen nehmen dabei mit zunehmender Belastung und damit zunehmender elastischer Verformung der Blattfeder 3 zu, was zu einer progressiven Federkennlinie führt. Der belastete Einbauzustand bei maximaler Einfederung ist mit gestrichelten Linien eingezeichnet. Es ist erkennbar, dass der Federungsabschnitt 8 deutlich nach oben gewölbt ist und der Biegeabschnitt 10 in Richtung zur ersten Aufnahmevorrichtung 4 gebogen ist.

Der erste Federschenkel 8 geht über den Übergangsabschnitt 9 in den zweiten Federschenkel 10 über, wobei der zweite Federschenkel 10 eine untere konkave beziehungsweise eine obere konvexe Wölbung aufweist. Insofern findet im Übergangsabschnitt 9 eine Krümmungsumkehr des Blattfederverlaufs statt. Über die Ausgestaltung des ersten Federschenkels 8, der auch als Federungsabschnitt bezeichnet wird, des Übergangsabschnitts 9 und des zweiten Federschenkels 10, der auch als Biegeabschnitt bezeichnet wird, lässt sich das Federungsverhalten und damit die Progression der Blattfeder 3 bei Belastung einstellen. Dabei gilt allgemein, dass je länger der Biegeabschnitt 10 ist, desto steifer ist die Feder. Bei der vorliegenden Ausführungsform ist der Radius R8 des Federungsabschnitts 8 um ein Vielfaches größer als der Radius R9 des Übergangsabschnitts 9 sowie des Radius R10 des Biegeabschnitts 10.

Die erste Aufnahmevorrichtung 4 ist so gestaltet, dass das erste Ende 5 der Blattfeder 3 hierin verschiebefest und momentenfrei aufgenommen ist. Insbesondere ist vorgesehen, dass das erste Ende 5 in Bezug auf alle drei Raumachsen (x, y, z) im Verschiebungssinn im Wesentlichen starr gehalten ist. Dabei soll die verschiebefeste Lagerung nach obiger Definition geringfügige Verschiebungen von bis zu 20 mm in mit umfassen, die sich beispielsweise aufgrund elastischer Verformungen der Aufnahmevorrichtung bei Belastung der Feder ergeben können. Die momentenfreie Lagerung wird dadurch bewerkstelligt, dass der Endabschnitt 5 um eine Schwenkachse X4 der ersten Aufnahmevorrichtung 4 schwenkbar gelagert ist. Die Schwenkachse X4 verläuft im Einbauzustand etwa quer zur Fahrzeuglängsachse, wobei gewisse Winkelabweichungen denkbar sind. Es ist insbesondere vorgesehen, dass das Federende 5 um mindestens 10° und/oder um maximal 60°, vorzugsweise um einen Verdrehwinkel von 25° bis 45°, relativ zur Aufnahme schwenkbar ist. Gegenüber den anderen beiden Raumachsen (y, z) ist das Federende 5 im Drehsinn zumindest im Wesentlichen starr gehalten, das heißt nicht schwenkbar.

Die erste Aufnahmevorrichtung 4 hat einen Aufnahmekörper 15, der gegenüber einem ortsfesten Träger 16 mittels geeigneter Lagermittel 17 um die Schwenkachse X4 drehbar gelagert ist, sowie einen Spannkörper 18, der mit dem Aufnahmekörper 15 beispielsweise mittels Schraubverbindungen 19 lösbar verbindbar ist. Der erste Endabschnitt 5 der Blattfeder 3 ist keilförmig ausgebildet mit einer zum Ende hin größer werdenden Dicke. Auf diese Weise wird ein Herausrutschen des Endabschnitts 5 aus der ersten Aufnahmevorrichtung 4 auch bei Höchstbelastung der Blattfeder 3 wirksam verhindert. Die schwenkbare beziehungsweise momentenfreie Lagerung des ersten Endabschnitts der Blattfeder 3 führt in der Aufnahmevorrichtung 4 zu verringerten Kräften zwischen der Feder und der Aufnahmevorrichtung.

Der entgegengesetzte zweite Endabschnitt 7 ist in der zweiten Aufnahmevorrichtung 6 aufgenommen, wobei die zweite Aufnahmevorrichtung 6 ein momentenfestes und verschiebefestes Lager für das zweite Ende 7 bildet. Hierfür hat die zweite Aufnahmevorrichtung 6 einen Aufnahmekörper 20, der mit einem ortsfesten Bauteil zu verbinden ist, wie einem Karosserieteil, sowie einen Spannkörper 22, der mit dem Aufnahmekörper 20 lösbar verbindbar ist, beispielsweise mittels Schraubverbindungen 23. Der zweite Endabschnitt 7 ist zwischen dem Spannkörper 22 und dem Aufnahmekörper 20 fest eingespannt, wobei auch hier insbesondere vorgesehen ist, dass sich die Blattfeder 3 zum Ende hin keilförmig erweitert. Auf diese Weise ist eine sichere Fixierung, auch bei größeren Belastungen, gewährleistet.

Es ist weiter erkennbar, dass die Blattfeder 3 über ihre Länge eine im Wesentlichen konstante Breite B3 aufweist, während die Dicke D3 über der Länge variabel ist. Durch örtliche Verdickungen, beispielsweise im Bereich der Endabschnitte 5, 7 oder im zentralen Bereich 12, können hier die Spannungen reduziert werden. Die örtlichen Verdickungen können beispielsweise durch zusätzliche Lagen von Prepregs in den entsprechenden Bereichen erreicht werden.

Die Blattfeder 3 ist vorzugsweise einteilig hergestellt, beispielsweise durch ein Pressverfahren aus unidirektionalen, vorimprägnierten Fasern, sogenannten Prepregs, mit duroplastischer oder thermoplastischer Matrix. Andere Herstellungsverfahren wie beispielsweise das Harzinjektionsverfahren (Resin Transfer Moulding, RTM) sind jedoch ebenso denkbar.

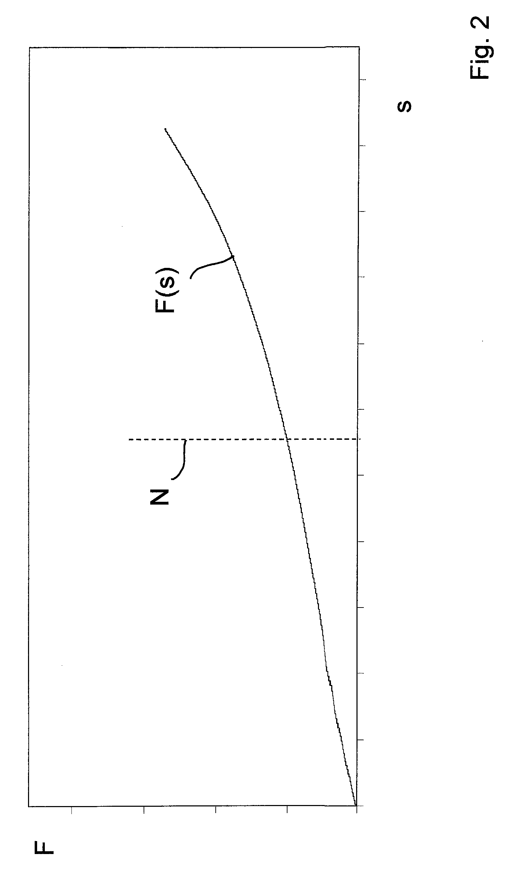

Figur 2 zeigt die Kraft-Weg-Kennlinie F(s) der Blattfederanordnung 2 gemäß Figur 1. Auf der Y-Achse ist die Kraft F angetragen und auf der X-Achse der Weg s. Es ist erkennbar, dass die Kraft F mit zunehmendem Federweg s zunimmt. Diese progressive Federkennlinie führt bei zunehmender Beladung beziehungsweise bei stärkerer Einfederung des Kraftfahrzeugs zu einer steiferen Federung, was sich in vorteilhafter Weise auf den Fahrkomfort und die Fahrstabilität des Kraftfahrzeugs auswirkt.

Die neutrale Position N, in welcher der Federungsabschnitt 8 im Wesentlichen gerade bzw. druck- und zugspannungsfrei ist, ist in Figur 2 mit gestrichelter Linie eingezeichnet. In dem Federungsbereich bis zum Erreichen der neutralen Position N ist der Federungsabschnitt 8 unten konvex gewölbt. In diesem Bereich, welcher sich links von der neutralen Position N befindet, ist die Federrate F(s) der Blattfeder 3 im Wesentlichen konstant. Im Federungsabschnitt 8 liegen insbesondere Biegespannungen an sowie Druckspannungen, die sich mit zunehmender elastischer Verformung bis zum Erreichen der neutralen Position N verringern. Mit Überschreiten der neutralen Position N, das heißt beim Übergang von der unteren konvexen zur unteren konkaven Wölbung des Federungsabschnitts 8 entstehen zusätzlich zu den Biegespannungen auch Zugspannungen, die mit zunehmender Belastung ansteigen, so dass auch die Federrate F(s) der Blattfeder 3 progressiv zunimmt. Dieser Bereich befindet sich rechts der neutralen Position N.

Der Verlauf der Kraft-Weg-Kennlinie F(s) der erfindungsgemäßen Blattfederanordnung kann durch entsprechende Ausgestaltung der Blattfeder 3 hinsichtlich ihrer physikalischen Größen, wie Länge, Breite und Dicke der einzelnen Blattfederabschnitte sowie die Aufnahmevorrichtungen 4, 6 beeinflusst werden. Grundsätzlich ist die Zuordnung des längeren Federschenkels 8 beziehungsweise kürzeren Federschenkels 10 zur momentenfreien Aufnahmevorrichtung 4 beziehungsweise momentenfesten Aufnahmevorrichtung 6 frei wählbar. Bei der in Figur 1 gezeigten Ausführungsform mit momentenfreier Lagerung des langen Federschenkels 8 und momentenfester Lagerung des kurzen Federschenkels 10 treten verhältnismäßig geringe Federkräfte in der Blattfeder 3 auf, welche dementsprechend auch verhältnismäßig geringe Federraten hat. Es können jedoch auch, je nach Anforderung an die Federung, andere Anordnungen gewählt werden, worauf weiter unten noch näher eingegangen wird.

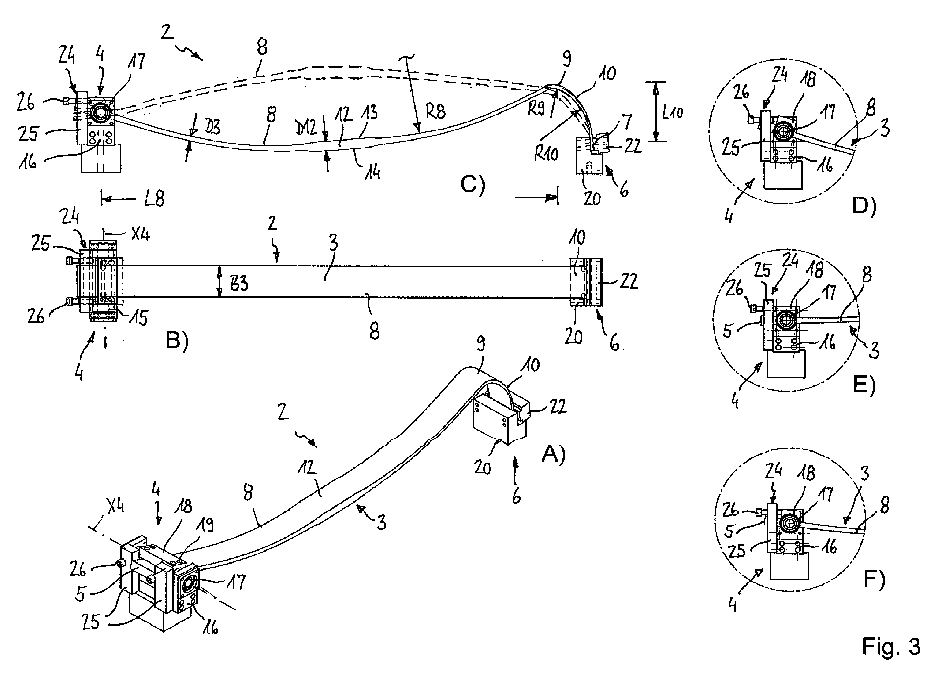

Die Figuren 3A) bis 3F), welche im Folgenden gemeinsam beschrieben werden, zeigen eine erfindungsgemäße Blattfederanordnung 3 in einer zweiten Ausführungsform. Diese entspricht weitestgehend der Ausführungsform gemäß Figur 1, so dass hinsichtlich der Gemeinsamkeiten auf die obige Beschreibung Bezug genommen wird. Dabei sind gleiche beziehungsweise einander entsprechende Bauteile mit gleichen Bezugszeichen versehen wie in Figur 1.

Eine Besonderheit der vorliegenden Ausführungsform gemäß den Figuren 3A) bis 3F) besteht in der Ausgestaltung der ersten Aufnahmevorrichtung 4. Diese ist ebenfalls zur momentenfreien und verschiebefesten Lagerung des ersten Endabschnitts 5 der Blattfeder 3 ausgestaltet. In Ergänzung zu der Ausführungsform gemäß Figur 1 ist vorliegend ein Anschlag 24 vorgesehen, welcher eine Schwenkbewegung des Aufnahmekörpers 15 beziehungsweise des Spannkörpers 18 in Umfangsrichtung begrenzt. Der Anschlag 24 umfasst zwei Platten 25, die mit dem Träger 16 fest verbunden ist, beispielsweise mittels Schraubverbindungen. Am oberen Ende der Anschlagplatten sind Gewindebohrungen vorgesehen, durch die Schraubbolzen 26 geschraubt sind. Die gewindeseitigen Enden der Schraubbolzen 26 wirken mit dem Spannkörper 18 derart zusammen, dass der Spannkörper 18 bei Belastung der Blattfeder 3 und entsprechender Drehbewegung um die Schwenkachse X4 gegen die Schraubenenden anschlagen. Der Anschlag 24 führt dazu, dass die grundsätzlich momentenfreie Lagerung festgesetzt wird, so dass nach Erreichen des Anschlags von der Blattfeder 3 um die Schwenkachse X4 wirkende Biegemomente dann von der ersten Aufnahmevorrichtung 4 aufgenommen und abgestützt werden. Dies hat zur Folge, dass sich die Progression der Kraft-Weg-Kennlinie F(s) der Blattfederanordnung 3 hin zu kürzeren Wegen (s) verlagert. Dabei kann der Anschlag 24 und damit der Verlauf der Federkennlinie F(s) durch entsprechendes Verdrehen des Schraubbolzens 26 stufenlos nach Bedarf eingestellt werden.

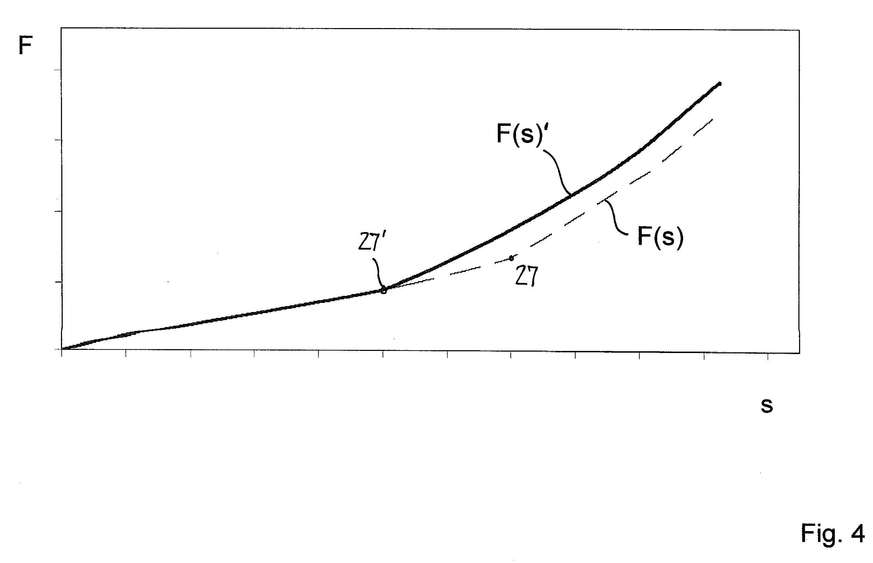

Die Figur 3D) zeigt die erste Aufnahmevorrichtung 4 in Seitenansicht als Detail in unbelastetem Zustand der Blattfeder 3. Hier ist ein Abstand zwischen dem Spannkörper 18 und dem Ende des Schraubbolzens 26 erkennbar. In Figur 3E) ist die erste Aufnahmevorrichtung 4 in belastetem Zustand der Blattfederanordnung 3 gezeigt. Es ist erkennbar, dass der erste Federschenkel 8 aufgrund der Belastung der Blattfeder 3 sich um die Schwenkachse X4 gegen den Uhrzeigersinn soweit verdreht hat, bis der Spannkörper 18 gegen das Ende des Schraubbolzens 26 zur Anlage gekommen ist. Der zugehörige Kraft-Weg-Verlauf F(s) ist in Figur 4 als gestrichelte Linie dargestellt. Es ist der Knickpunkt 27 eingezeichnet, durch den ein sprunghafter Anstieg der Federkraft F erreicht wird.

Die Figur 3F) zeigt die erste Aufnahmevorrichtung 4, bei der der Anschlag 24 früher wirksam wird, so dass eine Begrenzung der Drehbewegung des Federlagers bereits bei kürzerem Drehweg gehemmt wird. Hierfür ist der Spannbolzen 26 weiter in die Gewindebohrung der Trägerplatte 25 eingedreht, so dass der Spannkörper 18 schon bei einem kürzeren Federweg gegen den Anschlag 24 zur Anlage kommt. Die zugehörige Kraft-Weg-Kennlinie F(s)' ist in Figur 4 als durchgezogene Linie gezeigt. Es ist erkennbar, dass bereits bei einem kürzeren Federweg (s)' der Punkt 27' erreicht wird, ab dem ein sprunghafter Anstieg der Kraft F' stattfindet. Insgesamt wird damit eine steilere Kraft-Weg-Kennlinie F(s)' erreicht als bei einem längeren Federweg bis zur Abschaltung, wie in Figur 3E) gezeigt.

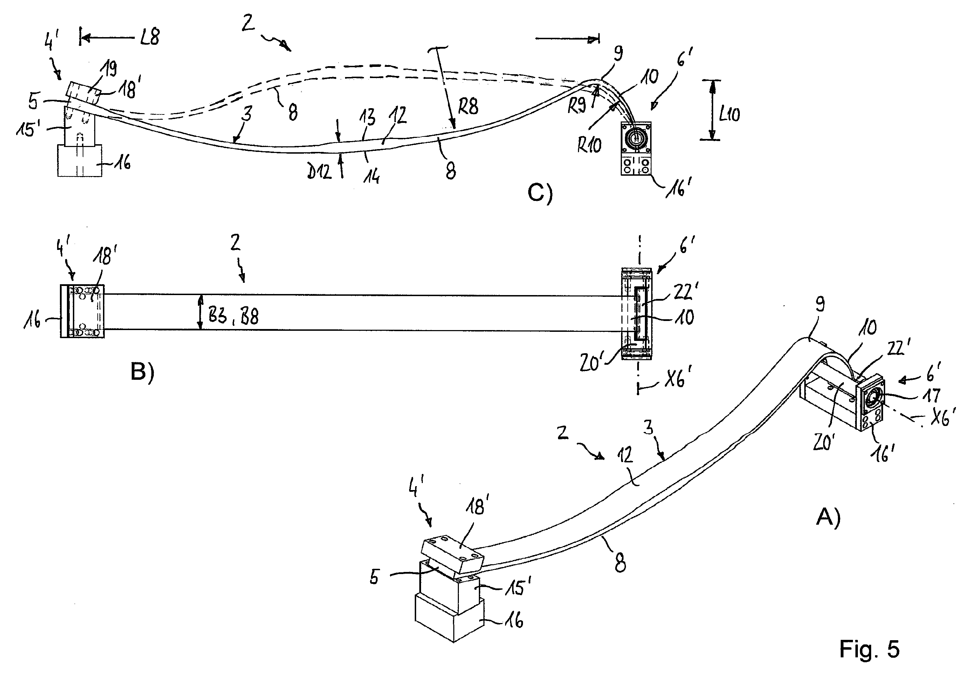

Die Figuren 5A) bis 5C) zeigen eine erfindungsgemäße Blattfederanordnung 2 in einer weiteren Ausführungsform. Diese entspricht in weiten Teilen der Ausführungsform gemäß Figur 1, so dass hinsichtlich der Gemeinsamkeiten auf die obige Beschreibung verwiesen wird. Dabei sind gleiche beziehungsweise einander entsprechende Einzelheiten mit denselben Bezugszeichen (mit Indizes) versehen wie in Figur 1.

Die Besonderheit der vorliegenden Ausführungsform gemäß Figur 5 liegt darin, dass das momentenfreie und das momentenfeste Lager gegenüber der Ausführungsform nach Figur 1 vertauscht sind, das heißt, die erste Aufnahmevorrichtung 4' bildet ein verschiebefestes und momentenfestes Lager für das Federende 5, während die zweite Aufnahmevorrichtung 6' ein verschiebefestes und momentenfreies Lager für das zweite Federende bildet. Auch hier soll der Begriff "verschiebefest" geringfügige Verschiebungen der Enden 5, 7 in Längsrichtung des Kraftfahrzeugs bei Belastung der Feder 3 mit umfassen. Das erste Ende 5 ist vorliegend in Bezug auf alle drei Raumachsen (x, y, z) im Verschiebungssinn und Drehsinn im Wesentlichen starr gehalten. Das zweite Ende 7 ist in Bezug auf die Querachse (x) im Drehsinn beweglich, und bezüglich der Längs- und Hochachsen (y, z) im Drehsinn zumindest im Wesentlichen starr gehalten.

Der Aufnahmekörper 15' ist fest mit einem Träger 16, beispielsweise einem Fahrwerksteil, verbunden, wobei fest so zu verstehen ist, dass zwischen dem Aufnahmekörper 15' und dem Träger 16 keinerlei Relativbewegung, wie Verschiebebewegungen oder Schwenkbewegungen, möglich sind. Der Endabschnitt 5 der Blattfeder 3 ist zwischen dem Spannköper 18' und dem Aufnahmekörper 15' eingespannt, wobei hierfür Spannbolzen (nicht dargestellt) in die entsprechenden Gewindebohrungen eingeschraubt werden können.

Die zweite Aufnahmevorrichtung 6', in welcher der zweite Endabschnitt 7 der Blattfeder 3 gelagert ist, ist als momentenfreies Lager ausgestaltet. Es ist ein schwenkbarer Aufnahmekörper 20' vorgesehen, welcher mittels einer entsprechenden Lagerung 17' gegenüber einem ortsfesten Trägerelement 16' um eine Schwenkachse X6' schwenkbar gelagert ist. Das keilförmige Ende 7 der Blattfeder 3 ist dabei zwischen dem schwenkbaren Aufnahmekörper 20' und dem Spannkörper 22' eingespannt, so dass es zwar verschiebefest, aber drehbeweglich in der zweiten Aufnahmevorrichtung 6' gehalten ist.

Durch die vorliegende Zuordnung der momentenfesten Lagerung am ersten Endabschnitt 5 beziehungsweise des ersten Federschenkels 8 wird eine verhältnismäßig hohe Federrate beziehungsweise hohe Federkraft erzeugt, das heißt, die zugehörige Kraft-Weg-Kennlinie F(s) hat eine steilere Progression als bei der Ausführungsform gemäß Figur 1.

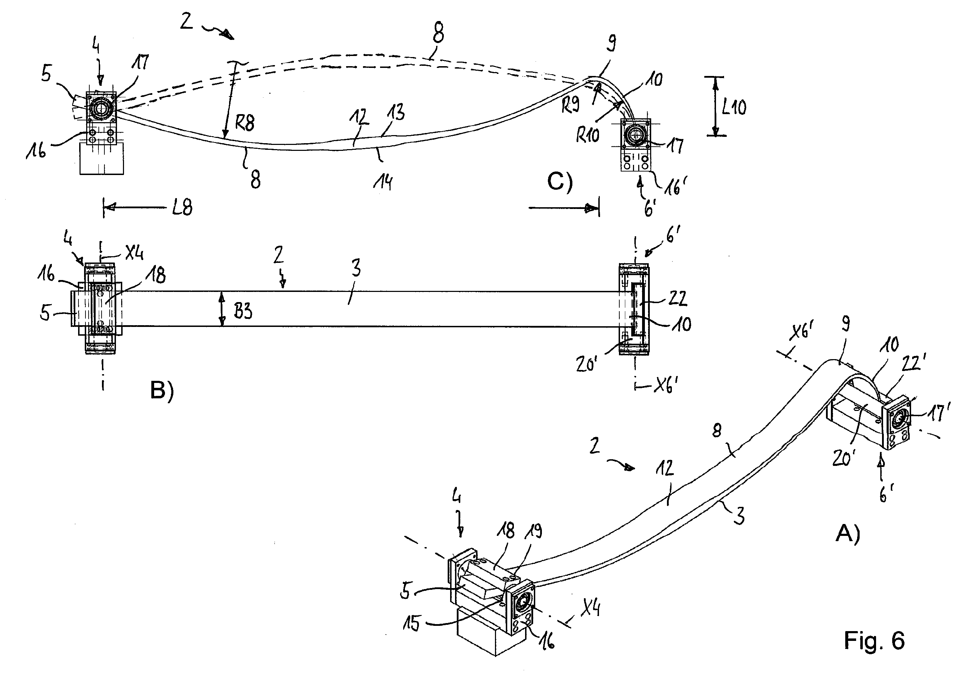

Die Figuren 6A) bis 6C), welche im Folgenden gemeinsam beschrieben werden, zeigen eine erfindungsgemäße Blattfederanordnung 2 in einer weiteren Ausführungsform. Diese entspricht einer Kombination der Ausführungsform gemäß Figur 1 und Figur 5, so dass hinsichtlich der Gemeinsamkeiten auf die obige Beschreibung Bezug genommen wird. Dabei sind gleiche beziehungsweise einander entsprechende Einzelheiten mit gleichen Bezugszeichen versehen wie in den Figuren 1 bis 5.

Die Besonderheit der vorliegenden Ausführungsform gemäß Figur 6 liegt darin, dass die erste Aufnahmevorrichtung 4 und die zweite Aufnahmevorrichtung 6' beide momentenfreie Lager bilden. Hierfür ist die erste Aufnahmevorrichtung 4 zum Einspannen des Endes 5 des ersten Federschenkels 8 um die Schwenkachse X4 schwenkbar gelagert. Das entgegengesetzte zweite Ende 7 des zweiten Federschenkels 10 ist entsprechend in der Aufnahmevorrichtung 6 um die Schwenkachse X6 schwenkbar gelagert. An beiden Federenden 5, 7 soll dabei vorzugsweise eine Schwenkbarkeit um jeweils mindestens 10° und/oder um maximal 60° relativ zur zugehörigen Aufnahme möglich sein, vornehmlich um 25° bis 45°. Die beiden Enden 5, 7 der Blattfeder 3 sind in den beiden Aufnahmevorrichtungen 4, 6' jeweils verschiebefest in Längsrichtung eingespannt, wobei auch hier die obige Definition von verschiebefester Lagerung gelten soll. Zur verschiebefesten Lagerung sind die keilförmigen Enden 5, 7 jeweils zwischen Aufnahmekörper 15, 20' und Spannkörper 18, 22' fixiert.

Durch die momentenfreie Lagerung der beiden Federenden 5, 7 gemäß der vorliegenden Ausführungsform werden besonders niedrige Federraten und Federkräfte erzeugt, das heißt, die Kraft-Weg-Kennlinie F(s) der Blattfederanordnung 2 hat einen besonders flachen Verlauf.

Für alle der vorstehend genannten Ausführungsformen gilt, dass das erste Ende 5 beziehungsweise der lange Federschenkel 8 im Einbauzustand am Kraftfahrzeug vorne liegt und das zweite Ende 7 beziehungsweise die zweite Aufnahmevorrichtung 6 entsprechend hinten.

Ein Vorteil der erfindungsgemäßen Blattfederanordnungen 2 ist, dass die Blattfeder 3 aufgrund ihrer verschiebefesten Fixierung der Endabschnitte 5, 7 sowohl auf Biegung als auch auf Zug beansprucht werden. Dabei überlagern sich die in der Feder 3 auftretenden Zug- und Biegespannungen und führen so insgesamt zu einer progressiven Federkennlinie F(s). Die Zugkräfte werden dadurch erzeugt, dass die Endabschnitte 5, 7 in Längsrichtung des Kraftfahrzeugs axial fest eingespannt sind. Bei Belastung der Feder 3 können diese sich folglich nicht aufeinander zu bewegen, was zu einer progressiven Steigung der Federkennlinie führt. Die momentenfreie Lagerung zumindest eines der Endabschnitte 5, 7 führt verglichen mit einer momentenfesten Lagerung zu reduzierten Spannungen in der Blattfeder 3.

### Bezugszeichenliste

- 2: Blattfederanordnung
- 3: Blattfeder
- 4: erste Aufnahmevorrichtung
- 5: erster Endabschnitt
- 6: zweite Aufnahmevorrichtung
- 7: zweiter Endabschnitt
- 8: Federungsabschnitt/erster Federschenkel
- 9: Übergangsabschnitt
- 10: Biegeabschnitt/zweiter Federschenkel
- 12: zentraler Bereich
- 13: Oberseite
- 14: Unterseite
- 15: Aufnahmekörper
- 16: Träger
- 17: Lager
- 18: Spannkörper
- 19: Schraubverbindung
- 20: Aufnahmekörper
- 22: Spannkörper
- 23: Schraubverbindung
- 24: Anschlag
- 25: Platte
- 26: Bolzen
- 27: Kurvenpunkt

- B: Breite
- D: Dicke
- F: Kraft
- L: Länge
- R: Radius
- s: Weg
- X: Schwenkachse

## Patentansprüche

1. Blattfederanordnung für eine Radaufhängung eines Kraftfahrzeugs, umfassend:
eine Blattfeder (3) aus faserverstärktem Kunststoffmaterial zur federnden Abstützung eines Radträgers des Kraftfahrzeugs, wobei die Blattfeder (3) einen ersten Endabschnitt (5), einen hiervon ausgehenden Federungsabschnitt (8), einen Biegeabschnitt (10) und einen zweiten Endabschnitt (7) aufweist, wobei sich der Federungsabschnitt (8) im Einbauzustand im Wesentlichen in Längsrichtung des Kraftfahrzeugs erstreckt und zur Aufnahme des Radträgers gestaltet ist, wobei der Federungsabschnitt (8) und der Biegeabschnitt (10) über einen gekrümmten Übergangsabschnitt (9) miteinander verbunden sind und der Federungsabschnitt (8) länger ist als der Biegeabschnitt (10);
eine erste Aufnahmevorrichtung (4) zur Lagerung des ersten Endabschnitts (5);
eine zweite Aufnahmevorrichtung (6) zur Lagerung des zweiten Endabschnitts (7);
wobei die erste Aufnahmevorrichtung (4) und die zweite Aufnahmevorrichtung (6) derart gestaltet sind, dass der erste Endabschnitt (5) und der zweite Endabschnitt (7) verschiebungsfest relativ zueinander gehalten sind, so dass die Blattfeder (3) mit steigender Belastung durch vom Radträger eingeleitete Vertikalkräfte zunehmend auf Zug belastet wird;
**dadurch gekennzeichnet, dass** zumindest eine der ersten und zweiten Aufnahmevorrichtungen (4, 6) derart gestaltet ist, dass der jeweils zugehörige Endabschnitt (5, 7) um eine quer zur Fahrzeuglängsachse verlaufende Schwenkachse (X4, X6) schwenkbar gelagert ist, und
dass im Einbauzustand der Blattfeder (3) der erste Endabschnitt (5) in Fahrtrichtung des Kraftfahrzeugs vorne und der zweite Endabschnitt (7) hinten angeordnet ist.

2. Blattfederanordnung nach Anspruch 1,
**dadurch gekennzeichnet, dass** die zumindest eine Aufnahmevorrichtung (4, 6) derart gestaltet ist, dass der zugehörige Endabschnitt (5) um mindestens bis zu 10° und/oder um maximal bis zu 60° um die Schwenkachse (X4, X6) schwenkbar ist.

3. Blattfederanordnung nach Anspruch 1 oder 2,
**dadurch gekennzeichnet, dass** die zumindest eine Aufnahmevorrichtung (4, 6) einen Anschlag (24) aufweist, welcher eine Schwenkbewegung der Blattfeder (3) um die Schwenkachse (X4, X6) begrenzt.

4. Blattfederanordnung nach einem der Ansprüche 1 bis 3,
**dadurch gekennzeichnet, dass** das Verhältnis der Länge (L8) des Federungsabschnitts (8) zur Länge (L10) des Biegeabschnitts (10) größer als 3 : 1 und kleiner als 10 : 1 ist.

5. Blattfederanordnung nach einem der Ansprüche 1 bis 4,
**dadurch gekennzeichnet, dass** die Blattfeder (3) derart gestaltet ist, dass der Federungsabschnitt (8) bei elastischer Verformung durch vom Radträger eingeleitete Vertikalkräfte in einem ersten Federwegbereich auf Druck belastet wird und in einem zweiten Federwegbereich auf Zug belastet wird.

6. Blattfederanordnung nach einem der Ansprüche 1 bis 5,
**dadurch gekennzeichnet, dass** der Federungsabschnitt (8) im unbelasteten Einbauzustand der Blattfeder (3) eine untere konvexe Wölbung hat und im belasteten Einbauzustand der Blattfeder (3) bei maximaler Einfederung eine untere konkave Wölbung, und
dass der Biegeabschnitt (10) im Einbauzustand der Blattfeder (3) eine untere konkave Wölbung hat.

7. Blattfederanordnung nach einem der Ansprüche 1 bis 6,
**dadurch gekennzeichnet, dass** der Federungsabschnitt (8) in einem teilweise belasteten Einbauzustand der Blattfeder (3) im Wesentlichen zug- und druckspannungsfrei ist.

8. Blattfederanordnung nach einem der Ansprüche 1 bis 7,
**dadurch gekennzeichnet, dass** der Federungsabschnitt (8) eine variable Dicke (D) und eine im Wesentlichen konstante Breite (B) über der Länge (L8) aufweist.

9. Blattfederanordnung nach einem der Ansprüche 1 bis 8,
**dadurch gekennzeichnet, dass** der erste Endabschnitt (5) und/oder der zweite Endabschnitt (7) mechanisch unbearbeitet, insbesondere bohrungsfrei gestaltet sind.

10. Blattfederanordnung nach einem der Ansprüche 1 bis 9,
**dadurch gekennzeichnet, dass** der erste Endabschnitt (5) und/oder der zweite Endabschnitt (7) keilförmig mit zu den Enden hin größer werdender Dicke gestaltet sind.

11. Blattfederanordnung nach einem der Ansprüche 1 bis 10,
**dadurch gekennzeichnet, dass** der Federungsabschnitt (8) einen zentralen Aufnahmebereich (12) zur Aufnahme des Radträgers aufweist, wobei der zentrale Aufnahmebereich (12) eine größere Dicke (D12) hat als hieran anschließende Bereiche des Federungsabschnitts (8), wobei der Aufnahmebereich (12) eine ebene Oberseite (13) und/oder Unterseite (14) aufweist, wobei die Oberseite (13) und die Unterseite (14) des Aufnahmebereichs (12) insbesondere parallel zueinander sind.

12. Blattfederanordnung nach einem der Ansprüche 1 bis 11,
**dadurch gekennzeichnet, dass** die Blattfeder (3) im Wege des Harzinjektionsverfahrens (Resin Transfer Moulding) oder durch ein Pressverfahren hergestellt ist.

13. Blattfederanordnung nach einem der Ansprüche 1 bis 12,
**dadurch gekennzeichnet, dass** die zumindest eine Aufnahmevorrichtung (4, 6') zur momentenfreien Lagerung einen Aufnahmekörper (15, 20') aufweist, der gegenüber einem ortsfesten Bauteil (16, 16') um die Schwenkachse (X4, X6') schwenkbar gelagert ist, sowie einen Spannkörper (18, 22), welcher mit dem Aufnahmekörper (15, 20') lösbar verbindbar ist, wobei der Endabschnitt (5) der Blattfeder (3) zwischen dem Aufnahmekörper (15, 20') und dem Spannkörper (18, 22) einspannbar ist.

14. Blattfederanordnung nach einem der Ansprüche 1 bis 13,
**dadurch gekennzeichnet, dass** eine der ersten und zweiten Aufnahmevorrichtungen (4', 6) derart gestaltet ist, dass der zugehörige Endabschnitt (5, 7) momentenfest in der Aufnahmevorrichtung (4', 6) gelagert ist.

15. Blattfederanordnung nach Anspruch 14,
**dadurch gekennzeichnet, dass** die Aufnahmevorrichtung (4', 6) zur momentenfesten Lagerung einen Aufnahmekörper (15', 20) aufweist, der an einem ortsfesten Bauteil (16, 16') fixiert ist, und einen Spannkörper (18', 22), der mit dem Aufnahmekörper (15', 20) lösbar verbindbar ist, wobei der Endabschnitt (5, 7) der Blattfeder (3) zwischen dem Aufnahmekörper (15', 20) und dem Spannkörper (18', 22) einspannbar ist.

## Claims

1. A leaf spring assembly for a wheel suspension of a motor vehicle, comprising:
a leaf spring (3) of fibre-reinforced plastics for resiliently supporting a wheel carrier of the motor vehicle, wherein the leaf spring (3) comprises a first end portion (5), a spring portion (8) extending therefrom, a bendable portion (10) and a second end portion (7), wherein the spring portion (8) extends substantially in longitudinal direction of the motor vehicle in the built-in condition and is configured for accommodating the wheel carrier, wherein the spring portion (8) and the bendable portion (10) are connected to each other by a curved transition portion (9) and the spring portion (8) is longer than the bendable portion (10);
a first receiving device (4) for supporting the first end portion (5);
a second receiving portion device (6) for supporting the second end portion (7);
wherein the first receiving device (4) and the second receiving device (6) are designed such that the first end portion (5) and the second end portion (7) are held in a non-displaceable way relative to one another, such that the leaf spring (3), with increasing load due to vertical forces introduced from the wheel carrier, is increasingly subjected to tensile loading,
**characterised in that** at least one of the first and second receiving devices (4, 6) is designed such that the respective associated end portion (5, 7) is pivotably supported around a pivot axis (X4, X6) extending transversely to a longitudinal axis of the vehicle and that in the built-in condition of the leaf spring (3) the first end portion (5) is arranged at the front and the second end portion (7) is arranged at the back in direction of travel of the motor vehicle.

2. A leaf spring assembly according to claim 1,
**characterised in**
**that** the at least one receiving device (4, 6) is designed such that the associated end portion (5) is pivotable by a minimum of up to 10° and/or by a maximum of up to 60° around the pivot axis (X4, X6).

3. A leaf spring assembly according to claim 1 or 2,
**characterised in**
**that** the at least one receiving device (4, 6) comprises a stop (24) which limits a pivot movement of the leaf spring (3) around the pivot axis (X4, X6).

4. A leaf spring assembly according to any one of claims 1 to 3,
**characterised in**
**that** the ratio of the length (L8) of the spring portion (8) to the length (L10) of the bendable portion (10) is greater than 3:1 and smaller than 10:1.

5. A leaf spring assembly according to any one of claims 1 to 4,
**characterised in that** the leaf spring (3) is designed such that the spring portion (8), upon elastic deformation due to vertical forces introduced from the wheel carrier, is subjected to pressure loading in a first spring travel range and is subjected to tensile loading in a second spring travel range.

6. A leaf spring assembly according to any one of claims 1 to 5,
**characterised in**
**that** the spring portion (8) comprises a lower convex curvature in the built-in condition of the leaf spring (3), and a lower concave curvature in the loaded built-in condition of the leaf spring (3) at the maximum spring deflection, and that the bendable portion (10) comprises a lower concave curvature in the built-in condition of the leaf spring (3).

7. A leaf spring assembly according to any one of claims 1 to 6,
**characterised in**
**that** the spring portion (8) is substantially free of tensile and compressive stresses in a partly loaded built-in condition of the leaf spring (3).

8. A leaf spring assembly according to any one of claims 1 to 7,
**characterised in**
**that** the spring portion (8) comprises a variable thickness (D) and a substantially constant width (B) along the length (L8).

9. A leaf spring assembly according to any one of claims 1 to 8,
**characterised in**
**that** the first end portion (5) and/or the second end portion (7) are unmachined, more particularly bore-free.

10. A leaf spring assembly according to any one of claims 1 to 9,
**characterised in**
**that** the first end portion (5) and/or the second end portion (7) are/is wedge-shaped with a thickness increasing towards the ends.

11. A leaf spring assembly according to any one of claims 1 to 10,
**characterised in**
**that** the spring portion (8) comprises a central receiving region (12) for receiving a wheel carrier, wherein the central receiving region (12) has a greater thickness (D12) than adjoining regions of the spring portion (8), wherein the receiving region (12) comprises a planar upper side (13) and/or a planar underside (14), wherein the upper side (13) and the underside (14) of the receiving region (12) more particularly extend parallel relative to one another.

12. A leaf spring assembly according to any one of claims 1 to 11,
**characterised in**
**that** the leaf spring (3) is produced by resin transfer moulding or by pressing.

13. A leaf spring assembly according to any one of claims 1 to 12,
**characterised in**
**that**, to ensure a moment-free support, the at least one receiving device (4, 6') comprises a receiving member (15, 20') which is pivotably supported relative to a stationary component (16, 16') around the pivot axis (X4, X6'), as well as a clamping member (18, 22) which is releasably connectable to the receiving member (15, 20'), wherein the end portion (5) of the leaf spring (3) can be clamped in between the receiving member (15, 20') and the clamping member (18, 22).

14. A leaf spring assembly according to any one of claims 1 to 13,
**characterised in**
**that** one of the first and second receiving devices (4',6) is designed such that the associated end portion (5, 7) is supported in a moment-resistant way in the receiving device (4', 6).

15. A leaf spring assembly according to claim 14,
**characterised in**
**that**, to ensure moment-resistant support, the receiving device (4', 6) comprises a receiving member (15', 20) which is fixed to a stationary component (16, 16'), and a clamping member (18', 22) which is releasably connectable to the receiving member (15', 20), wherein the end portion (5, 7) of the leaf spring (3) can be clamped in between the receiving member (15', 20) and the clamping member (18', 22).

## Revendications

1. Système à ressort à lame pour une suspension de roues d'un véhicule automobile, comprenant :
un ressort à lame (3) dans une matière plastique renforcée de fibres pour un support élastique d'un support de roue du véhicule automobile, le ressort à lame (3) comportant une première section finale (5), une section de suspension (8) partant de celle-ci, une section de flexion (10) et une deuxième section finale (7), la section de suspension (8) s'étendant à l'état montée pour l'essentiel dans la direction longitudinale du véhicule automobile et étant configurée pour recevoir le support de roue, la section de suspension (8) et la section de flexion (10) étant reliées entre elles par une section de transition galbée (9) et la section de suspension (8) étant plus longue que la section de flexion (10),
un premier dispositif de réception (4) pour loger la première section finale (5),
un deuxième dispositif de réception (6) pour loger la deuxième section finale (7),
le premier dispositif de réception (4) et le deuxième dispositif de réception (6) étant configurés de telle manière que la première section finale (5) et la deuxième section finale (7) sont maintenues fixes en déplacement l'une par rapport à l'autre de telle manière que le ressort à lame (3) est sollicité en traction de façon croissante avec une charge croissante par la force verticale initiée par le support de roue,
**caractérisé en ce qu**'au moins un des premier et deuxième dispositifs de suspension (4,6) est configuré de telle manière que la section finale respectivement correspondante (5,7) est logé pouvant pivoter autour d'un axe de pivotement (X4,X6) passant transversalement à l'axe longitudinal du véhicule, et **en ce que** à l'état monté du ressort à lame (3), la première section finale (5) est disposée à l'avant et la deuxième section finale (7) à l'arrière dans le sens de la marche du véhicule automobile.

2. Système à ressort à lame selon la revendication 1, **caractérisé en ce qu'**au moins un dispositif de logement (4,6) est configuré de telle manière que la section finale correspondante (5) peut être pivotée au moins jusqu'à 10° et/ou d'un maximum allant jusqu'à 60° autour de l'axe de pivotement (X4, X6).

3. Système à ressort à lame selon la revendication 1 ou 2, **caractérisé en ce qu'**au moins un dispositif de réception (4,6) comporte une butée (24), laquelle limite un mouvement de pivotement du ressort à lame (3) autour de l'axe de pivotement (X4,X6).

4. Système à ressort à lame selon l'une quelconque des revendications 1 à 3, **caractérisé en ce que** le rapport entre la longueur (L8) de la section de suspension (8) et la longueur (L10) de la section de flexion (10) est supérieure à 3:1 et inférieure à 10:1.

5. Système à ressort à lame selon l'une quelconque des revendications 1 à 4, **caractérisé en ce que** le ressort à lame (3) est configuré de telle manière que la section de suspension (8) est sollicitée en pression dans une première zone de déflexion du ressort lors de la déformation élastique par les forces verticales initiées par le support de roue et est sollicitée en traction dans une deuxième zone de déflexion de ressort.

6. Système à ressort à lame selon l'une quelconque des revendications 1 à 5, **caractérisé en ce que** la section de suspension (8) a une courbure convexe inférieure à l'état monté non sollicité du ressort à lame (3) et une courbure concave inférieure à l'état monté sollicité du ressort à lame (3) lors du débattement maximal du ressort, et **en ce que** la section de flexion (10) a une courbure concave inférieure à l'état monté du ressort à lame (3).

7. Système à ressort à lame selon l'une quelconque des revendications 1 à 6, **caractérisé en ce que** la section de suspension (8) est pour l'essentiel exempte d'effort de traction et de pression dans un état monté partiellement sollicité du ressort à lame (3).

8. Système à ressort à lame selon l'une quelconque des revendications 1 à 7, **caractérisé en ce que** la section de suspension (8) comporte une épaisseur variable (D) et une largeur (B) pour l'essentiel constante sur la longueur (L8).

9. Système à ressort à lame selon l'une quelconque des revendications 1 à 8, **caractérisé en ce que** la première section finale (5) et/ou la deuxième section finale (7) sont configurées sans usinage mécanique, en particulier exemptes de trou.

10. Système à ressort à lame selon l'une quelconque des revendications 1 à 9, **caractérisé en ce que** la première section finale (5) et/ou la deuxième section finale (7) sont configurées en forme de coin avec une épaisseur devenant plus grosse vers les extrémités.

11. Système à ressort à lame selon l'une quelconque des revendications 1 à 10, **caractérisé en ce que** la section de suspension (8) comporte une zone de réception centrale (12) pour loger le support de roue, la zone de réception centrale (12) possédant une épaisseur plus grande (D12) que les zones de la section de suspension (8) suivantes après celle-ci, la zone de réception (12) comportant une face supérieure (13) et/ou une face inférieure (14) plane, la face supérieure (13) et la face inférieure (14) de la zone de réception (12) étant en particulier parallèles l'une par rapport à l'autre.

12. Système à ressort à lame selon l'une quelconque des revendications 1 à 11, **caractérisé en ce que** le ressort à lame (3) est fabriqué au cours d'un procédé d'injection de résine (moulage par transfert de résine) ou par un procédé de moulage.

13. Système à ressort à lame selon l'une quelconque des revendications 1 à 12, **caractérisé en ce qu'**au moins un dispositif de réception (4,6') comporte un corps de réception (15,20') pour un logement exempt de couple, qui est logé pouvant pivoter par rapport à un composant fixe (16,16') autour d'un axe de pivotement (X4,X6), ainsi qu'un corps de serrage (18,22), qui peut être relié de manière amovible au corps de réception (15,20'), la section finale (5) du ressort à lame (3) pouvant être montée entre le corps de réception (15,20') et le corps de serrage (18,22).

14. Système à ressort à lame selon l'une quelconque des revendications 1 à 13, **caractérisé en ce qu'**un des premier et deuxième dispositifs de réception (4',6) est configuré de telle manière que la section finale correspondante (5,7) est logée dans le dispositif de réception (4',6) exempte de couple.

15. Système à ressort à lame selon la revendication 14, **caractérisé en ce que** le dispositif de réception (4',6) comporte un corps de réception (15',20) pour le logement résistant aux couples, qui est fixé à un composant fixe (16,16') et un corps de serrage (18',22) qui peut être relié de manière amovible au corps de réception (15',20), la section finale (5,7) du ressort à lame (3) pouvant être montée entre le corps de réception (15',20) et le corps de serrage (18',22)
